# EUROPÄISCHE PATENTANMELDUNG

(11) **EP 3 115 189 A1**
(43) Veröffentlichungstag der Anmeldung: **11.01.2017**
(21) Anmeldenummer: 16001315.7
(22) Anmeldetag: 10.06.2016
(51) Int. Cl.: B30B 3/00, B22F 3/105, B30B 11/16

(54) **KÜHLBARE WALZEN FÜR WALZENPRESSEN**

(30) Priorität: 12.06.2015 DE 102015007343
(71) Anmelder: HOSOKAWA ALPINE Aktiengesellschaft, 86199 Augsburg (DE)
(72) Erfinder: Rosen, Robert, 74336 Brackenheim (DE); Küchler, Kurt, 74078 Heilbronn (DE); Krebs, Bernd, 91177 Spalt (DE)

(57) **Zusammenfassung**

Bei kühlbaren Walzen (1) für Walzenpressen soll die Führung des Kühlmittels optimiert werden. Dies wird dadurch erreicht, dass die Walzen (1) einteilig gefertigt werden und einen großen inneren Hohlraum (9) mit Stützgerüst (6) aufweisen.

## Beschreibung

Die vorliegende Erfindung betrifft kühlbaren Walzen für Walzenpressen und ein Verfahren zur Herstellung der kühlbaren Walzen.

In vielen Bereichen der Industrie, insbesondere in der chemischen und der pharmazeutischen Industrie, gelangen häufig pulverförmige Schüttgüter zur Anwendung, die sich aufgrund der schlechten Fließeigenschaften von Pulvern nur schwer verarbeiten lassen. Pulver werden deshalb oft in Granulate überführt. Eine gängige Methode zur Granulierung von Pulvern ist das sogenannte Kompaktieren. Beim Kompaktieren wird das zu granulierende Pulver einer ein Walzenpaar aufweisenden Walzenpresse zugeführt und durch den zwischen den beiden Walzen gebildeten Walzenspalt geleitet. Zwischen den Walzen, insbesondere im Walzenspalt selbst, wird das Pulver zu sogenannten Schülpen verdichtet.
Diese Art Walzenpressen weisen eine ersten drehbaren Walze und eine zweite gegenläufig drehbare Walze auf, die zwischen sich einen Walzenspalt bilden, durch den im Betrieb zu verarbeitendes Material geführt wird, und deren Drehachsen zumindest im Wesentlichen parallel zueinander verlaufen.

Kühlbare Walzen kommen bei temperaturempfindlichen Produkten wie z. B. pharmazeutischen Produkten zum Einsatz.

In der pharmazeutischen Industrie werden häufig nur kleine Mengen Wirkstoff verarbeitet, sodass auch Maschinen kleiner Baugrößen benötigt werden. Kompliziert aufgebaute Teile von Maschinen stoßen in Bezug auf kleine Baugrößen schnell an ihre Grenzen, Eine Möglichkeit bieten hier additive Fertigungsverfahren.

### Stand der Technik

Bei bekannten gekühlten Kompaktier- oder Brikettierwalzen nach dem Stand der Technik werden Walzenringe auf die Welle mittels Presspassung gefügt.
Das Kühlmedium wird über zwei koaxiale Kanäle im Zentrum der Welle zum Walzensitz geführt. Die Verbindung zum Nabensitz ist mit Querbohrungen vorgesehen. Der Walzenring ist mit Bohrungen für den mäanderartigen Verlauf des Kühlwassers im Walzenring oder auch mit paralleler Kühlwasserführung versehen. Durch geeignete Bohrungen oder Nuten im Walzenring werden die Versorgungsbohrungen der Welle mit den Bohrungen des Walzenringes verbunden. Nachteilig dabei ist, dass diese Art der Kühlung ineffektiv ist. Die Kühlkanäle müssen aus Festigkeitsgründen einen bestimmten Abstand zur Walzenoberfläche und zueinander haben. Die Kühlkanäle können auch nicht beliebig groß im Querschnitt gewählt werden. Beides zusammen bewirkt eine nur begrenzte Kühlwirkung, die für bestimmte temperaturempfindliche Produkte nicht ausreicht. Durch diesen Aufbau kommt es an einigen Stellen zu Undichtigkeiten, die wiederum zu Kühlwasseraustritt und damit zu Kontamination im Produkt führen können.

### Aufgabe

Der Erfindung liegt die Aufgabe zu Grunde, kühlbare Walzen mit optimierter Führung des Kühlmediums bereitzustellen, die sich einteilig mittels additiver Fertigungsverfahren herstellen lassen.

### Lösung

Bei Walzen für Walzenpressen oder Kompaktoren der eingangs beschriebenen Art wird die Aufgabe erfindungsgemäß dadurch gelöst, dass die Walzen einteilig mittels additiver Fertigungsverfahren, speziell Laserschmelzverfahren hergestellt sind.

Die erfindungsgemäßen, kühlbaren Walzen sind einteilig ausgeführt und weisen einen großen inneren Hohlraum mit einer dünnwandigen Innenstruktur auf. Diese Innenstruktur dient einer optimierten Führung des Kühlmediums und Wärmeabfuhr über das Kühlmedium. Die Innen-Struktur dient gleichzeitig dem Abbau der statischen und dynamischen Last die beim Kompaktieren des Produktes entsteht. Diese Walzen mit der entsprechenden Innenstruktur lassen sich einteilig mit additiven Fertigungsverfahren herstellen. Zur Anwendung kommt speziell das Laserschmelzverfahren.

Die hohle Innenstruktur der Walzen besteht aus einem Stützgerüst. Das Stützgerüst besteht aus mehreren radial ausgerichteten gleichmäßig beabstandeten dünnwandigen Stützelementen. Die Stützelemente erstrecken sich vom Walzenumfang bis zum Nabensitz und stützen sich auch an den Stirnseiten der Walzen ab. Die Stützelemente weisen Durchbrechungen auf. Die Walzen weisen je nach Größe von 10 bis zu 50 Stützelemente auf.

Die Zwischenräume dienen als Kühlräume, durch die das Kühlmedium geführt wird. Als Kühlmedium kommt vorzugsweise Wasser zum Einsatz, aber auch andere geeignete flüssige Kühlmittel können verwendet werden.

Die dünnwandigen Innenstrukturen wie auch der dünnwandige Walzenmantel weisen einen verbesserten Wärmedurchgang auf. Gleichzeitig wird durch die dünnwandige Innenstruktur der Walzen ein großer innerer Hohlraum in den Walzen geschaffen, so dass einen verbesserte Wärmeabfuhr durch das Kühlmedium erfolgt.

Die Walzen weisen mindestens 2 Bohrungen an der Welle/Narbe-Verbindung auf, sie dienen als Kühlmediumein- und -austritt. Das Kühlmedium wird den Walzen über zwei koaxiale Versorgungskanäle in der Welle der Walzen, die mittels Drehdurchführungen für die Wasserzu- und -abfuhr von außen versorgt werden. Mindestens 2 Bohrungen in radialer Richtung stellen die Verbindung zum Wellensitz her.

Die Walzen haben eine strömungsgünstige innere Geometrie, die es erlaubt großflächig zu Kühlen.

Die Stützelemente können auch der Führung des Kühlmediums dienen. Weisen die Stutzelemente abwechselnd Durchbrechungen, einmal innenliegend zum Nabensitz hin und einmal außenliegend zur Wellenoberfläche hin, auf, ergibt sich eine mäanderförmige Zwangsströmung.

Die einteiligen kühlbaren Walzen weisen diese Innen-Struktur auch auf um die statische und dynamische Last die beim Kompaktieren des Produktes entsteht abzubauen. Die beim Kompaktieren wirkenden Kräfte werden vom Walzenumfang zum Nabensitz in die Welle abgeleitet.

Bei der Herstellung der einteiligen kühlbaren Walzen mittels Laserschmelzverfahren werden schichtweise Metallpulver verschmolzen Wo Hohlräume entstehen sollen, wird das Pulver nicht verschmolzen und nach dem Prozess entfernt. Die Walzen werden nach dem Verfahren mechanisch bearbeitet und somit die Außenkontur hergestellt.

Die kühlbaren Walzen werden aus Edelstahl 1.4404 oder anderen geeigneten Werkstoffen hergestellt

Durch den Aufbau der Walzen und ihrem Herstellungsverfahren lässt sich Ihr Gewicht um mindesten 40% reduzieren, da durch die Hohlräume sehr viel Material eingespart wird.

Die innere Struktur ist so gewählt, dass einerseits die Wasserkühlung über verbesserten Wärmeübergang optimal realisiert werden kann. Andererseits führt das Gewölbe die statischen und dynamischen Kräfte beim Kompaktieren von der Walzenoberfläche zum Walzensitz in die Welle ab. Die Walzen können durch diesen Aufbau einteilig hergestellt werden.

Weitere Einzelheiten, Merkmale und Vorteile des Gegenstandes der Erfindung ergeben sich aus den Unteransprüchen sowie aus der nachfolgenden Beschreibung der zugehörigen Zeichnungen, in der-beispielhaft- ein bevorzugtes Ausführungsbeispiel der Erfindung dargestellt ist.

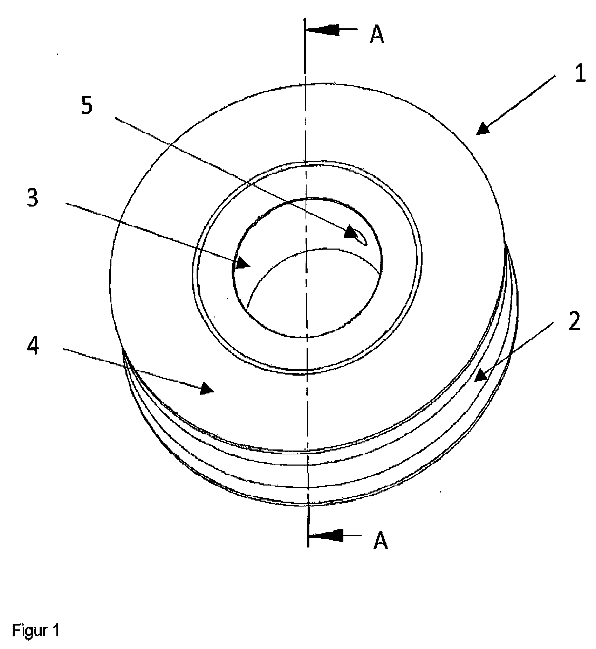

Figur 1 zeigt eine erfindungsgemäße Walze in einer perspektivischen Ansicht

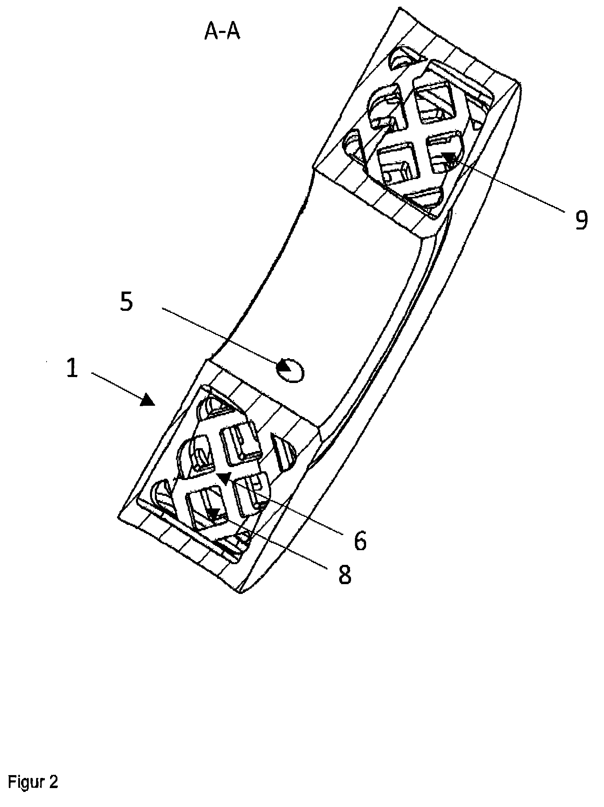

Figur 2 zeigt die Walze perspektivisch im Schnitt.

Die einteilige zylindrische Walze 1 weist einen Walzenmantel 2 und einen Nabensitz 3 auf, mit dem sie auf der nicht dargestellten Welle montiert ist. Der Walzenmantel 2 weist an seiner Oberfläche die Presswerkzeuge 4 auf. Sie sind je nach Kompaktieraufgabe unterschiedlich ausgebildet. Im abgebildeten Fall sind die glatt ausgeführt. Die Walzenoberflächen können auch geriffelt, mit Kreuzkordel oder Stäbchen ausgeführt sein.

Am Nabensitz 3 ist eine der Bohrungen 5 für die Versorgung der Walzen mit Kühlmittel dargestellt.

Im Innern der Walze 1 sind die radial ausgerichteten, gleichmäßig beabstandeten Stützelemente 6 angeordnet. Die Stützelemente 6 sind dünnwandig ausgeführt. Sie weisen eine gitterartige Form auf, die sich vom Walzenmantel 2 zum Nabensitz 3 erstreckt und sich an den Walzenstirnseiten 7 abstützt. Die Stützelemente 6 weisen Durchbrechungen 8 auf. Die Räume zwischen den Stützelementen 6 dienen als Kühlräume 9, durch die das Kühlwasser geführt wird.

Diese einteiligen kühlbaren Walzen für eine Walzenpresse oder Kompaktor wird mit additiven Fertigungsverfahren herstellen. Zur Anwendung kommt speziell das Laserschmelzverfahren.

### Bezugszahlen

- 1: Walze
- 2: Walzenmantel
- 3: Nabensitz
- 4: Presswerkzeuge
- 5: Bohrungen
- 6: Stützelemente
- 7: Walzenstirnseiten
- 8: Durchbrechungen
- 9: Kühlräume

## Patentansprüche

1. Kühlbare Walzen für eine Walzenpresse **dadurch gekennzeichnet, dass** die Walzen einteilig mittels additiver Fertigungsverfahren, speziell Laserschmelzverfahren hergestellt sind.

2. Kühlbare Walzen nach Anspruch 1 **dadurch gekennzeichnet, dass** die Walzen innen Hohlräume und ein Stützgerüst aufweisen.

3. Kühlbare Walzen nach Anspruch 2 **dadurch gekennzeichnet, dass** die inneren Hohlräume Kühlkanäle für das Kühlmedium sind.

4. Kühlbare Walzen nach Anspruch 2 **dadurch gekennzeichnet, dass** das Stützgerüst aus dünnwandigen Stützelementen aufgebaut ist

5. Kühlbare Walzen nach Anspruch 4 **dadurch gekennzeichnet, dass** die Stützelemente radial gleichmäßig beabstandet zwischen Walzenmantel und Nabensitz ausgerichtet sind

6. Kühlbare Walzen nach Anspruch 5 **dadurch gekennzeichnet, dass** die Stützelemente Durchbrechungen aufweisen

7. Kühlbare Walzen nach Anspruch 2 **dadurch gekennzeichnet, dass** die Walzen mindestens zwei Bohrungen an der Welle/Nabe-Verbindung als Kühlmediumein- und -austritts aufweisen

8. Kühlbare Walzen nach Anspruch 1 **dadurch gekennzeichnet, dass** die Walzen aus Edelstahl 1.4404 hergestellt sind

9. Kühlbare Walzen nach Anspruch 1 **dadurch gekennzeichnet, dass** die Walzen
eine Gewichtseinsparung gegenüber Vollmaterial von mindestens 40% aufweisen.

10. Verfahren zur Herstellung von kühlbaren Walzen für Walzenpressen bei welchem die Walzen einteilig mit großen Hohlräumen und einem Stützgerüst im inneren der Walzen mittels eines Laserschmelzverfahrens hergestellt werden.
